(19) Europäisches Patentamt
European Patent Office
Office européen des brevets

(11) **EP 3 712 121 A1**

(12) **EUROPEAN PATENT APPLICATION**

(43) Date of publication:
**23.09.2020 Bulletin 2020/39**

(51) Int Cl.:
**C04B 35/486** (2006.01)    **A61C 13/00** (2006.01)

(21) Application number: **20152600.1**

(22) Date of filing: **20.01.2020**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority:  **21.01.2019   JP 2019007411**

(71) Applicant: **Shofu Inc.**
**Kyoto-shi, Kyoto 605-0983 (JP)**

(72) Inventors:
• **NONAKA, Kazumichi**
  **KYOTO, 605-0983 (JP)**
• **TAKAHASHI, Shuhei**
  **KYOTO, 605-0983 (JP)**

(74) Representative: **Eisenführ Speiser**
**Patentanwälte Rechtsanwälte PartGmbB**
**Postfach 31 02 60**
**80102 München (DE)**

(54) **HIGH PERMEABLE ZIRCONIA BLANK CAPABLE OF SINTERING AT HIGH SPEED**

(57)    An object of the present invention is to provide a zirconia mill blank for dental cutting and machining which may impart high translucency similar to an enamel of a natural tooth to zirconia sintered body even in a short time sintering, and a preparing method thereof. In addition, the present invention provides a zirconia mill blank for dental cutting and machining which may impart the same degree of translucency to a zirconia sintered body even in a short time sintering as compared with the case of sintering for 427 minutes.

The zirconia mill blank for dental cutting and machining of the present invention contains a gallium compound.

**Description**

BACKGROUND OF THE INVENTION

Field of the Invention

The present invention relates to a zirconia mill blank for dental cutting and machining capable of high speed sintering.

Description of the Related Art

In recent years, techniques to prepare a prosthesis device by the cutting and machining which uses the dental CAD/CAM system spread rapidly and therefore it has been becoming possible to easily prepare prosthetic devices by cutting and machining the blanks which are made of ceramic materials such as zirconia, alumina and lithium disilicate glass, and resin materials such as an acrylic resin and a hybrid resin.

In particular, zirconia has been clinically applied in various cases because of its high strength. On the other hand, the sintered zirconia which can be used in the oral cavity (hereinafter, referred to as "zirconia sintered body") has a very high hardness, and therefore cannot be cut and machined by using a dental CAD / CAM system. Thus, a zirconia which is not fully sintered but is calcined at a low firing temperature to adjust to a hardness that enables to cut and machine has been used as a zirconia mill blank for dental cutting and machining.

A general zirconia mill blank for dental cutting and machining is prepared by molding a zirconia powder by press molding or the like and then calcining it at 800 to 1200 °C.

The zirconia prosthesis device may be prepared by forming a zirconia mill blank for dental cutting and machining into a desired shape by cutting and machining or the like and perfect sintering by firing at a temperature more than a sintering temperature. In this firing, since a heating up time of several hours or more and a holding time of several hours are require, production efficiency is low, and multiple dental visits are necessary before a patient can mount a prosthesis device.

On the other hand, in late years, a sintering furnace which is available for a firing time from several tens of minutes to several hours has been spread. However, when the conventional zirconia mill blank for dental cutting and machining is sintered in a short time, there is a problem that translucency and strength are not provided enough.

Patent Document 1 discloses a zirconia mill blank for dental cutting and machining. However, since this sintered body sintered in a short time has insufficient translucency and strength, it has been difficult to apply to the cases where high translucency is required such as an inlay, an onlay, a veneer, and a front tooth or where high strength is required such as a molar tooth.

Patent Document 2 discloses a zirconia mill blank for dental cutting and machining of which high translucency is provided in the sintered body which is sintered in 15 minutes of holding time. Since the sintered body has high translucency, the sintered body has been clinically applied to the case where high aesthetics is required such as a front tooth portion. However, the translucency of the sintered body is still insufficient.

Patent Document 3 discloses a zirconia mill blank for dental cutting and machining which can be sintered within 30 minutes. However, since the translucency of the sintered body is insufficient, it is not suitable for the cases where high translucency is required such as an inlay, an onlay, a veneer and a front tooth.

Patent Document 4 discloses a preparing method of a zirconia sintered body in 30 to 90 minutes. However, since the translucency or strength of the sintered body is insufficient, it has been difficult to apply to the cases where high translucency is required such as an inlay, an onlay, a veneer, and front tooth or where high strength is required such as a molar tooth.

Patent Document 5 discloses a zirconia blank for dental cutting and machining prepared by using a zirconia powder containing 4 to 6.5 mol% of yttrium and a zirconia sintered body prepared from the zirconia blank. Since the sintered body has high translucency, the sintered body is clinically applied to the case where high aesthetics is required such as a front tooth portion. However, since the sintered body prepared by sintering the zirconia blank in a short time has low translucency, it is not suitable for the cases where high translucency is required such as an inlay, an onlay, a veneer and a front tooth.

Relevant References

Patent Literature

[Patent document 1] International Publication No. WO2015/098765

[Patent document 2] International Publication No. WO2018/056330

[Patent document 3] International Publication No. WO2018/029244

[Patent document 4] CN Patent Publication No. CN107162603

[Patent Document 5] International Publication No. WO2015/199018

SUMMARY OF THE INVENTION

Technical Problem

An object of the present invention is to provide a zirconia mill blank for dental cutting and machining which may impart clinically necessary translucency to a zirconia sintered body even in a short time sintering, and a preparing method thereof. Further, other object of the present invention is to provide a zirconia mill blank for dental cutting and machining which may impart the same degree of translucency to a zirconia sintered body even in a short time sintering as compared with the case of sintering for 427 minutes.

Solution to Problem

The present inventors made a study on a zirconia mill blank for dental cutting and machining which may impart clinically necessary translucency to a zirconia sintered body even in a short time sintering. As a result, the present inventors have found that the addition of a gallium compound to the zirconia mill blank for dental cutting and machining is particularly important for imparting the transparency similar to an enamel of the natural tooth to the zirconia sintered body even in a short sintering time. The details of the present invention are as follows.

In the present invention, the short time sintering means a sintering time (or a sintering period of time) of 6 to 90 minutes, and particularly preferably sintering time of 6 to 30 minutes.

The sintering time in the present invention means the period of time required for heating up and holding in the firing process, and does not include the time required for cooling after firing.

The zirconia mill blank for dental cutting and machining of the present invention contains a gallium compound. In the zirconia mill blank for dental cutting and machining of the present invention, it is preferable that an amount of the gallium compound is within a range of 0.20 wt.% to 1.50 wt.% in terms of gallium oxide ($Ga_2O_3$).

In the zirconia mill blank for dental cutting and machining of the present invention, it is particularly preferable that the amount of the gallium compound is within a range of 0.30 wt.% to 1.00 wt.% in terms of gallium oxide ($Ga_2O_3$).

Further, in the present invention, it is preferable that the zirconia mill blank for dental cutting and machining further contains an yttrium compound in an amount within a range of 5.0 to 12.5 wt.% in terms of yttria ($Y_2O_3$), and it is more preferable to contain an amount within a range of 6.0 to 11.5 wt.%. It is preferable that the zirconia mill blank for dental cutting and machining of the present invention consists of a zirconia particle containing a solid solved yttrium compound.

In the present invention, it is preferable that in a case in which a sintered body prepared by sintering at 1560 °C for a sintering time of 24 minutes is defined as a 24 minutes sintered body and a sintered body prepared by sintering at 1560 °C for a sintering time of 427 minutes is defined as a 427 minutes sintered body,

a relationship of a contrast ratio of a sample having a thickness of 1 mm between the 24 minutes sintered body and the 427 minutes sintered body satisfies the following formula (1).

Formula (1): (Contrast ratio of 24 minutes sintered body) / (Contrast ratio of 427 minutes sintered body) × 100 ≤ 102 (%)

In the present invention, it is preferable that in a case in which a sintered body prepared by sintering at 1560 °C for a sintering time of 6.4 minutes is defined as a 6.4 minutes sintered body and a sintered body prepared by sintering at 1560 °C for a sintering time of 427 minutes is defined as a 427 minutes sintered body,

a relationship of a contrast ratio of a sample having a thickness of 1 mm between the 6.4 minutes sintered body and the 427 minutes sintered body satisfies the following formula (2).

Formula (2): (Contrast ratio of 6.4 minutes sintered body) / (Contrast ratio of 427 minutes sintered body) × 100 ≤ 102 (%)

Advantageous Effects of Invention

The zirconia mill blank for dental cutting and machining of the present invention may impart the clinically necessary translucency to a zirconia sintered body in a short time. In addition, the zirconia mill blank for dental cutting and machining of the present invention may impart the same degree of translucency to a zirconia sintered body even in very short sintering time of 6 to 90 minutes or less as compared with the case of sintering for 427 minutes.

DETAILED DESCRIPTION OF THE PREFERRED EMBODIMENTS

The constituent features of the present invention will be specifically described.

The zirconia mill blank for dental cutting and machining of the present invention has a feature of containing a gallium compound. Further, the zirconia mill blank for dental cutting and machining of the present invention is preferably a zirconia mill blank for dental cutting and machining consisting of a zirconia particle containing a solid-solved yttrium compound.

A compounding amount of a zirconia contained in the zirconia mill blank for dental cutting and machining in the present invention can be an arbitrary content, for example, the zirconia is contained as the residue of other constitutions contained in the zirconia mill blank for dental cutting and machining described below. Specifically, the compounding amount of zirconia is preferably within a range of 80 wt.% to 99.8 wt.%, more preferably 85 wt.% to 93 wt.%, and most preferably 86 wt.% to 93 wt.%.

A compounding amount of the gallium compound contained in the zirconia mill blank for dental cutting and machining in the present invention is preferably within a range of 0.20 wt.% to 1.50 wt.%, and more preferably 0.30 wt.% to 1.00 wt.% in terms of gallium oxide. When the amount of the gallium oxide is less than 0.20 wt.%, there is a tendency that sufficient translucency cannot obtained in the zirconia sintered body sintered in a short time. On the other hand, when the amount of the gallium oxide exceeds 1.50 wt.%, there is a tendency that sufficient translucency cannot obtained in the zirconia sintered body.

There is no limitation on the state of the gallium compound in the zirconia mill blank for dental cutting and machining of the present invention before becoming a zirconia sintered body. Specifically, it may be solid solved in the zirconia, or may exist as a gallium compound in a crystal or an amorphous which are different from the zirconia.

Any known gallium compounds can be used as the gallium compound without any limitation. Specific examples of the gallium compound used in the present invention include oxides, halides, nitrates, sulfates, organic acid salts of gallium, and the like. More specific examples include gallium oxide, gallium nitrate, gallium chloride, gallium sulfate, and the like.

In the present invention, it is preferable in a method of adding a gallium compound that it is possible to uniformly add a specific amount of the gallium compound to the zirconia mill blank for dental cutting and machining. For example, a method of adding a gallium compound in preparing a zirconia particle which is the raw material of a zirconia mill blank for dental cutting and machining may be used, or a method of immersing a zirconia molded body in a solution containing a gallium compound may be used.

When the method of immersing a zirconia molded body in a solution containing a gallium compound is used, any solvents can be used for the gallium solution, but specific examples can be used include water, alcohol, an organic solvent and the like. Water, ethanol and a mixture thereof are particularly preferable since it is easily available and is easy to handle.

It is preferable that the zirconia mill blank for dental cutting and machining of the present invention further contains an yttrium compound in an amount within a range of 5.0 to 12.5 wt.% in terms of yttria, and it is more preferable to contain an amount within a range of 6.0 to 11.5 wt.%. It is preferable in a method of adding an yttrium compound in the present invention that it is possible to uniformly add a specific amount of the yttrium compound to the zirconia mill blank for dental cutting and machining. For example, a method of adding an yttrium compound in preparing a zirconia particle as the raw material of a zirconia mill blank for dental cutting and machining may be used, or a method of immersing a zirconia molded body in a solution containing an yttrium compound may be used. It is preferable that the yttrium compound is solid-solved in a zirconia particle which is the raw material of a zirconia mill blank for dental cutting and machining. When the amount of yttria is less than 5.0 wt.%, it is not preferable because sufficient translucency may be not imparted to the zirconia perfect sintered body. On the other hand, when the amount of yttria exceeds 12.5 wt.%, although the translucency of the zirconia perfect sintered body is improved, it is difficult to impart sufficient strength.

It is preferable that the primary particle diameter of a zirconia particle as a raw material of the zirconia mill blank for dental cutting and machining in the present invention is within a range of 1 to 500 nm. When the primary particle diameter is less than 1 nm, there is a tendency that it is difficult to impart sufficient strength, although the translucency of the zirconia sintered body is improved. On the other hand, when the primary particle diameter is 500 nm or more, there is a tendency that it is difficult to impart sufficient strength to the zirconia sintered body.

It is preferable that the zirconia mill blank for dental cutting and machining of the present invention contains a coloring material. Specific examples thereof include iron oxide for imparting a yellow color and erbium for imparting a red color. In addition to these coloring materials, there is no problem even if a coloring material containing element such as cobalt, manganese and chromium is used in combination for a color tone adjustment. In the present invention, the tooth color can be easily colored by including the coloring material.

The zirconia mill blank for dental cutting and machining of the present invention may contain a sintering aid. Specifically, for the purpose of improving the sinterability and suppressing low temperature deterioration, it is preferable to contain 0.01 to 0.3 wt.% of alumina. When the amount of alumina is less than 0.01 wt.%, there is a tendency that the zirconia perfect sintered body may be not sintered sufficiently and therefore sufficient strength and translucency may be not imparted. On the other hand, when the amount of alumina exceeds 0.3 wt.%, there is a tendency that it may be difficult to impart sufficient translucency although strength of the zirconia sintered body is improved.

It is preferable that the relative density of the zirconia sintered body prepared by firing the zirconia mill blank for dental cutting and machining of the present invention within a range of 1450 °C to 1600 °C is 98% or more of the theoretical density. The relative density is determined by the measured density/the theoretical density. When the relative density is less than 98%, the strength and translucency tend to be lowered.

It is preferable that a crystal phase of the zirconia mill blank for dental cutting and machining of the present invention is tetragonal and/or cubic. When the crystal phase is monoclinic phase, it is not preferable because sufficient translucency may be not imparted to the zirconia perfect sintered body.

The preparing method of the zirconia mill blank for dental cutting and machining of the present invention is not particularly limited, and any known preparing methods can be used without any problem. Specifically, it is preferable to be prepared by molding a zirconia powder by a press molding. Furthermore, it is more preferable to be prepared by a multilayer molding in which zirconia powders having different color tones or compositions are press-molded in multiple stages.

The zirconia mill blank for dental cutting and machining of the present invention is preferably subjected to isostatic pressing by cold isostatic pressing (CIP treatment) after the press molding.

The maximum load pressure of CIP treatment in the present invention is preferably 50 Mpa or more. When the maximum load pressure is less than 50 MPa, there is a case where sufficient translucency and strength may be not imparted to the zirconia sintered body.

The holding time at the maximum load pressure of the CIP treatment of the present invention is not particularly limited, but in general, a range of 0 to 150 seconds is preferable and a range of 0 to 60 seconds is more preferable.

The time period required for the above series of processes for preparing an unfired body of a zirconia mill blank for dental cutting and machining which is subjected to the calcination described below is not particularly limited, but in general, a range of 30 seconds to 10 minutes is preferable and a range of 3 minutes to 7 minutes is more preferable. When the time is too short, a molding body may be destroyed, and when the time is too long, production efficiency worsens, and therefore these are not preferable.

A calcination temperature of the zirconia mill blank for dental cutting and machining of the present invention is preferably within a range of 800 to 1200 °C. When the calcination temperature is less than 800 °C, because Vickers hardness and/or bending strength become too low and therefore there is a tendency that chipping and breakage easily occur in the cutting and machining. On the other hand, when the calcination temperature is more than 1200 °C, because Vickers hardness and/or bending strength become too high and therefore there is a tendency that a milling bar of a milling machine is heavily consumed to raise a running cost.

The zirconia mill blank for dental cutting and machining of the present invention can be prepared, for example, by the above-described preparing method. The prepared zirconia mill blank for dental cutting and machining is severed, cut, and polished so as to have a desired size as necessary.

The zirconia mill blank for dental cutting and machining of the present invention may impart the same degree of translucency to a zirconia sintered body even in a short sintering time as compared with the case of the normal sintering (427 minutes sintering).

The method for sintering the zirconia mill blank for dental cutting and machining of the present invention is not particularly limited, but a simple and preferred method is to firing at normal pressure.

The firing temperature of the normal sintering (427 minutes sintering) is within a range of 1450 to 1600 °C. The holding time at the maximum firing temperature is within a range of 2 to 4 hours. The temperature increase rate is within a range of 1 to 20 °C/min.

In a preferred condition of the short time sintering in the present invention, a firing temperature is within a range of 1450 to 1600 °C. The holding time at the maximum firing temperature is not particularly limited, but is preferably within a range of 1 minute to 1 hour, and more preferably within a range of 2 to 10 minutes. The temperature increase rate is not particularly limited, but is preferably within a range of 30 to 400 °C/min, and more preferably within a range of 50 to 350 °C/min.

It is preferable that in a case in which a sintered body prepared by sintering at 1560 °C for a sintering time of 24 minutes is defined as a 24 minutes sintered body and a sintered body prepared by sintering at 1560 °C for a sintering time of 427 minutes is defined as a 427 minutes sintered body, a relationship of a contrast ratio of a sample having a thickness of 1 mm between the 24 minutes sintered body and the 427 minutes sintered body satisfies the following formula (1).

Formula (1): (Contrast ratio of 24 minutes sintered body) / (Contrast ratio of 427 minutes sintered body) × 100 ≤ 102 (%)

Further, it is preferable that in a case in which a sintered body prepared by sintering at 1560 °C for a sintering time of 6.4 minutes is defined as a 6.4 minutes sintered body and a sintered body prepared by sintering at 1560 °C for a sintering time of 427 minutes is defined as a 427 minutes sintered body, a relationship of a contrast ratio of a sample having a thickness of 1 mm between the 6.4 minutes sintered body and the 427 minutes sintered body satisfies the following formula (2).

Formula (2): (Contrast ratio of 6.4 minutes sintered body) / (Contrast ratio of 427 minutes sintered body) × 100 ≤ 102 (%)

The kind of a prosthesis device prepared by cutting and machining the zirconia mill blank for dental cutting and machining according to the present invention is not limited particularly, and there is no problem at all even if the prosthesis device is any of an inlay, an onlay, a veneer, a crown, a bridge and the like. Therefore, a shape of a zirconia mill blank for dental cutting and machining which is cut and machined for preparing a prosthesis device is not limited particularly, and any zirconia mill blank for dental cutting and machining can be used even if the zirconia mill blank for dental cutting and machining has any shape such as a block shape corresponding to an inlay, an onlay, a veneer, a crown and the like and a disk shape corresponding to a bridge.

[Examples]

Hereinafter, the present invention will be described in detail with reference to Examples. However, the present invention is not limited to these Examples.

[Measurement of content (wt.%)]

The test specimen for evaluating the content was prepared by cutting and machining each zirconia mill blank into a round plate shape (φ14 mm × 1.6 mm). The amount of each component on each of the upper surface and the lower surface of each test specimen was measured by using a fluorescent X-ray analysis device (manufactured by Rigaku Corporation), and the average value of each of the upper surface and the lower surface was defined as the content of each component. Further, the content (wt.%) of each component is shown in terms of oxide.

[Sintering conditions]

(1) 6.4 minutes sintering

Sintering time: 6.4 minutes

Each test specimen prepared by cutting and machining the zirconia mill blank for dental cutting and machining into a predetermined shape was fired in a firing furnace (firing temperature: 1560 °C, temperature increase rate: 350 °C/min, holding time: 2 minutes) to prepare a zirconia sintered body.

(2) 24 minutes sintering

Sintering time: 24 minutes

Each test specimen prepared by cutting and machining the zirconia mill blank for dental cutting and machining into a predetermined shape was fired in a firing furnace (firing temperature: 1560 °C, temperature increase rate: 70 °C/min, holding time: 2 minutes) to prepare a zirconia sintered body.

(3) 427 minutes sintering

Sintering time: 427 minutes

Each test specimen prepared by cutting and machining the zirconia mill blank for dental cutting and machining into a predetermined shape was fired in a firing furnace (firing temperature: 1560 °C, temperature increase rate: 5 °C/min, holding time: 120 minutes) to prepare a zirconia sintered body.

[Evaluation of Translucency]

The test specimen for evaluating the translucency was prepared by cutting and machining the zirconia mill blank for dental cutting and machining into a round plate shape ($\varphi$14 mm $\times$ 1.6 mm). Each specimen was sintered in a firing furnace (24 minutes, 6.4 minutes sintering, 427 minutes sintering). Then, the thickness (1.0 mm) of each test body was adjusted with a surface grinder. The translucency was evaluated by measuring the contrast ratio. The contrast ratio was measured by using a spectrocolorimeter (manufactured by Konica Minolta). Yw is the value Y measured by placing the white plate under the each sintered test specimen, and Yb is the value Y measured by placing the black plate under the each sintered test specimen. The contrast ratio was calculated from the following formula.
When the contrast ratio value is close to zero, the materials are transparency. When the contrast ratio value is close to 1, the materials are opaqueness.

$$\text{Formula: The contrast ratio} = Yb / Yw$$

Further, the following ABC score was used for the evaluation using the contrast ratio.
The contrast ratio of 6.4 minutes or 24 minutes sintered body $\leq$ 0.68: A
0.68 < the contrast ratio of 6.4 minutes or 24 minutes sintered body $\leq$ 0.72: B (However, excluding the case when A is applicable)
0.72 < the contrast ratio of 6.4 minutes and 24 minutes sintered body: C
In the case of A, either the 6.4 minutes sintered body or the 24 minutes sintered body has an extremely high translucency which is sufficiently applicable to cases where high translucency is required.
In the case of B, either the 6.4 minutes sintered body or the 24 minutes sintered body has a sufficiently high translucency which is applicable to cases to some extent where high translucency is required.
In the case of C, both the 6.4 minutes and 24 minutes sintered bodies have a clinically necessary transparency, although the transparency is lower than those of A and B and it may be unsuitable for cases in which high translucency is required.

[Evaluation of percentage of contrast ratio by sintering time]

The contrast ratios in the case of sintering for 6.4 minutes, sintering for 24 minutes and sintering for 427 minutes the zirconia mill blank for dental cutting and machining were compared by the following formulas (1) and (2).

$$\text{Formula (1): The 24 minutes contrast ratio percentage} = (\text{Contrast ratio of 24 minutes sintered body}) / (\text{Contrast ratio of 427 minutes sintered body}) \times 100\ (\%)$$

$$\text{Formula (2): The 6.4 minutes contrast ratio percentage} = (\text{Contrast ratio of 6.4 minutes sintered body}) / (\text{Contrast ratio of 427 minutes sintered body}) \times 100\ (\%)$$

When the contrast ratio percentage value is close to 0, the 6.4 minutes or 24 minutes sintered body is more transparent than the 427 minutes sintered body. When the contrast ratio percentage value is closer to 100, the difference in the translucency becomes small. When the more the number of the contrast ratio percentage value exceeds 100, the more the 6.4 minutes or 24 minutes sintered body is opaque as compared with the 427 minutes sintered body.

Further, the following ABC score was used for the evaluation using the contrast ratio percentage value.
The contrast ratio percentage value of 6.4 minutes ≤ 102 %, and, the contrast ratio percentage value of 24 minutes ≤ 102 %: A

102 % < the contrast ratio percentage value of 6.4 minutes, and, the contrast ratio percentage value of 24 minutes ≤ 102 %: B

102 % < the contrast ratio percentage value of 6.4 minutes, and, 102 % < the contrast ratio percentage value of 24 minutes: C

In the case of A, it is possible to sinter by 6.4 or more minutes sintering.

In the case of B, it is possible to sinter by 24 or more minutes sintering, but it is impossible to sinter by 6.4 minutes sintering.

In the case of C, it is impossible to sinter by 6.4 minutes sintering.

[Comprehensive Evaluation of Translucency]

Based on the Evaluation of Translucency and the Evaluation of percentage of contrast ratio by sintering time, the translucency was comprehensively evaluated by the ABC score as follows.
Evaluation of Translucency is "A" and Evaluation of percentage of contrast ratio by sintering time is "A": Comprehensive Evaluation is "A".
Evaluation of Translucency is "A" and Evaluation of percentage of contrast ratio by sintering time is "B": Comprehensive Evaluation is "A".
Evaluation of Translucency is "A" and Evaluation of percentage of contrast ratio by sintering time is "C": Comprehensive Evaluation is "C".
Evaluation of Translucency is "B" and Evaluation of percentage of contrast ratio by sintering time is "A": Comprehensive Evaluation is "A".
Evaluation of Translucency is "B" and Evaluation of percentage of contrast ratio by sintering time is "B": Comprehensive Evaluation is "B".
Evaluation of Translucency is "B" and Evaluation of percentage of contrast ratio by sintering time is "C": Comprehensive Evaluation is "C".
Evaluation of Translucency is "C" and Evaluation of percentage of contrast ratio by sintering time is "A": Comprehensive Evaluation is "B".
Evaluation of Translucency is "C" and Evaluation of percentage of contrast ratio by sintering time is "B": Comprehensive Evaluation is "C".
Evaluation of Translucency is "C" and Evaluation of percentage of contrast ratio by sintering time is "C": Comprehensive Evaluation is "C".

In the case of the comprehensive evaluation "A", the 24 minutes sintered body has extremely high transparency which is the same degree as that of the 427 minutes sintering time, or the 6.4 minutes sintered body has extremely high transparency which is the same degree as that of the 427 minutes sintering time.

In the case of the comprehensive evaluation "B", the 24 minutes sintered body has sufficiently high transparency which is the same degree as that of the 427 minutes sintering time, or the 6.4 minutes sintered body has clinically necessary translucency which is the same degree as that of the 427 minutes sintering time.

In the case of the comprehensive evaluation "C", the 24 minutes sintered body has clinically necessary translucency which is the same degree as that of the 427 minutes sintering time or transparency lower than that of the 427 minutes sintering time.

[Evaluation of Three-Point Bending Strength]

The three-bending test specimen was prepared by cutting and machining the zirconia mill blank for dental cutting and machining into a plate shape (width: 4.8 mm x length: 20 mm x thickness: 1.6 mm). Each test specimen was perfect sintered (sintering time: 427 minutes) in a firing furnace. Thereafter, the size of each test specimen (width: 4.0 mm × length: 16 mm × thickness: 1.2 mm) was adjusted with a surface grinder. The bending test was performed in accordance with ISO6872 (span distance: 12 mm, crosshead speed: 1.0 mm / min).

[Preparation of Zirconia mill blank for dental cutting and machining]

Example 1: Zirconia powder containing 9.3 wt.% of solid-solved yttria (Zpex SMILE: manufactured by Tosoh Corporation, containing 0.05 wt.% of alumina) was filled in a mold ($\varphi$100 mm), and press molding (surface pressure: 50 MPa) was performed to obtain a molded body. Further, the molded body was subjected to CIP treatment (maximum load pressure: 200 MPa, load pressure after releasing: 0 MPa, holding time: 1 minute, repeat times: 10 times). Thereafter, calcination was performed in an electric furnace (1000 °C, 30 minutes) to prepare a zirconia temporarily sintered body. The temporarily sintered body was immersed in an impregnating solution (20 wt.% gallium nitrate-ethanol solution) at room temperature under an atmospheric pressure for 12 hours. Thereafter, the zirconia temporarily sintered body was taken out from the solution and completely dried in a dryer at 120 °C to prepare a zirconia mill blank for dental cutting and machining. By the addition of the gallium compound, the yttria content in the prepared zirconia mill blank for dental cutting and machining was lower than that in the raw material powder and was 9.2 wt.% (described in the table in the following examples).

Example 2: A zirconia mill blank was prepared in the same manner as in Example 1 except that the impregnating solution was a 22 wt.% gallium nitrate-ethanol solution.

Example 3: A zirconia mill blank was prepared in the same manner as in Example 1 except that the impregnating liquid was a 27 wt.% gallium nitrate-ethanol solution.

Example 4: A zirconia mill blank was produced in the same manner as in Example 1 except that the impregnating liquid was a 30 wt.% gallium nitrate-ethanol solution.

Example 5: A zirconia mill blank was prepared in the same manner as in Example 1 except that the impregnating solution was a 35 wt.% gallium nitrate-ethanol solution.

Example 6: A zirconia mill blank was prepared in the same manner as in Example 1 except that the impregnating liquid was a 28 wt.% gallium nitrate aqueous solution.

Example 7: A zirconia mill blank was prepared in the same manner as in Example 1 except that the impregnating liquid was a 8.5 wt.% gallium nitrate-ethanol solution.

Example 8: A zirconia mill blank was prepared in the same manner as in Example 1 except that the impregnating liquid was a 50 wt.% gallium nitrate aqueous solution.

Example 9: A zirconia mill blank was prepared in the same manner as in Example 1 except that zirconia powder containing 6.9 wt.% of solid solved yttria (Zpex4: manufactured by Tosoh Corporation, containing 0.05 wt.% of alumina) was used.

Example 10: A zirconia mill blank was prepared in the same manner as in Example 1 except that zirconia powder containing 5.2 wt.% of solid solved yttria (Zpex: manufactured by Tosoh Corporation, containing 0.05 wt.% of alumina) was used.

Example 11: A zirconia mill blank was prepared in the same manner as in Example 1 except that the impregnating liquid was a 16 wt.% gallium sulfate-ethanol solution.

Example 12: A zirconia mill blank was prepared in the same manner as in Example 1 except that the impregnating liquid was a 12 wt.% gallium chloride-ethanol solution.

Example 13: A zirconia mill blank was prepared in the same manner as in Example 1 except that zirconia powder prepared by mixing 100 g of zirconia powder containing 9.3 wt.% of solid solved yttria and 5.8 g of gallium oxide in a ball mill was used.

Example 14: A zirconia mill blank was prepared in the same manner as in Example 1 except that zirconia powder prepared by mixing 100 g of zirconia powder containing 6.9 wt.% of solid solved yttria and 5.8 g of gallium oxide in a ball mill was used.

Example 15: A zirconia mill blank was prepared in the same manner as in Example 1 except that zirconia powder made by mixing 100 g of zirconia powder containing 5.2 wt.% of solid solved yttria and 5.8 g of gallium oxide in a ball mill was used.

Example 16: A zirconia mill blank was prepared in the same manner as in Example 1 except that zirconia powder containing 10.5 wt.% of solid solved yttria was used.

Example 17: A zirconia mill blank was prepared in the same manner as in Example 1 except that Fe, Er and Co were added as a coloring material.

Example 18: A zirconia mill blank was prepared in the same manner as in Example 1 except that the impregnating liquid was a 3.5 wt.% gallium nitrate-ethanol solution.

Example 19: A zirconia mill blank was prepared in the same manner as in Example 1 except that the impregnating liquid was a 10.3 wt.% gallium nitrate-ethanol solution.

Example 20: A zirconia mill blank was prepared in the same manner as in Example 1 except that the impregnating liquid was a 51.5 wt.% gallium nitrate-ethanol solution.

Example 21: A zirconia mill blank was prepared in the same manner as in Example 1 except that the impregnating liquid was a 58.5 wt.% gallium nitrate-ethanol solution.

Example 22: A zirconia mill blank was prepared in the same manner as in Example 1 except that zirconia powder containing 4.0 wt.% of solid solved yttria (containing 0.05 wt.% of alumina) was used.

Example 23: A zirconia mill blank was prepared in the same manner as in Example 1 except that zirconia powder containing 6.0 wt.% of solid solved yttria (containing 0.05 wt.% of alumina) was used.

Example 24: A zirconia mill blank was prepared in the same manner as in Example 1 except that zirconia powder containing 11.5 wt.% of solid solved yttria (containing 0.05 wt.% of alumina) was used.

Example 25: A zirconia mill blank was prepared in the same manner as in Example 1 except that zirconia powder containing 12.5 wt.% of solid solved yttria (containing 0.05 wt.% of alumina) was used.

Example 26: A zirconia mill blank was prepared in the same manner as in Example 1 except that zirconia powder containing 14.0 wt.% of solid solved yttria (containing 0.05 wt.% of alumina) was used.

Example 27: A zirconia mill blank was prepared in the same manner as in Example 1 except that zirconia powder containing 9.3 wt.% of solid solved yttria (containing 0.01 wt.% of alumina) was used.

Example 28: A zirconia mill blank was prepared in the same manner as in Example 1 except that zirconia powder containing 9.3 wt.% of solid solved yttria (containing 0.30 wt.% of alumina) was used.

Comparative Example 1: Zirconia powder containing 9.3 wt.% of solid-solved yttria (Zpex SMILE: manufactured by Tosoh Corporation, containing 0.05 wt.% of alumina) was filled in a mold ($\varphi$100 mm), and press molding (surface pressure: 50 MPa) was performed to obtain a molded body. Further, the molded body was subjected to CIP treatment (maximum load pressure: 200 MPa, load pressure after releasing: 0 MPa, holding time: 1 minute, repeat times: 10 times). Thereafter, calcination was performed in an electric furnace (1000 °C, 30 minutes) to prepare a zirconia temporarily sintered body.

Comparative Example 2: A zirconia mill blank was prepared in the same manner as in Comparative Example 1 except that zirconia powder containing 6.9 wt.% of solid-solved yttria (Zpex4: manufactured by Tosoh Corporation, containing 0.05 wt.% of alumina) was used.

Comparative Example 3: A zirconia mill blank was prepared in the same manner as in Comparative Example 1 except that zirconia powder containing 5.2 wt.% of solid-solved yttria (Zpex4: manufactured by Tosoh Corporation, containing 0.05 wt% of alumina) was used.

Table1 shows the characteristic test results of the prepared zirconia mill blank for dental cutting and machining in Examples and Comparative Examples.

It was confirmed in Example 17 that coloring was possible. In the table, the description of the composition and the amount thereof in the zirconia mill blank other than zirconia, yttria, gallium oxide and alumina is omitted.

[Table 1]

| | | Example 1 | Example 2 | Example 3 | Example 4 | Example 5 | Example 6 | Example 7 | Example 8 | Example 9 | Example 10 | Example 11 | Example 12 | Example 13 | Example 14 | Example 15 |
|---|---|---|---|---|---|---|---|---|---|---|---|---|---|---|---|---|
| Zirconia content (wt.%) | | 87.2 | 87.2 | 87.0 | 87.0 | 86.8 | 87.1 | 87.5 | 86.7 | 89.5 | 91.2 | 87.1 | 87.3 | 87.3 | 89.5 | 91.2 |
| Yttria content (wt.%) | | 9.2 | 9.2 | 9.2 | 9.2 | 9.2 | 9.2 | 9.3 | 9.2 | 6.9 | 5.2 | 9.2 | 9.2 | 9.2 | 6.9 | 5.2 |
| Gallium oxide content (wt.%) | | 0.58 | 0.63 | 0.77 | 0.85 | 0.99 | 0.65 | 0.25 | 1.12 | 0.58 | 0.59 | 0.60 | 0.56 | 0.58 | 0.57 | 0.57 |
| Alumina content (wt.) | | 0.05 | 0.05 | 0.05 | 0.05 | 0.05 | 0.05 | 0.05 | 0.05 | 0.05 | 0.05 | 0.05 | 0.05 | 0.05 | 0.05 | 0.05 |
| Contrast ratio | 6.4 minutes sintering | 0.92 | 0.92 | 0.93 | 0.93 | 0.93 | 0.93 | 0.93 | 0.93 | 0.72 | 0.74 | 0.91 | 0.92 | 0.91 | 0.72 | 0.74 |
| | 24 minutes sintering | 0.66 | 0.67 | 0.68 | 0.68 | 0.68 | 0.67 | 0.69 | 0.69 | 0.71 | 0.74 | 0.67 | 0.68 | 0.66 | 0.72 | 0.74 |
| | 427 minutes sintering | 0.68 | 0.68 | 0.69 | 0.69 | 0.69 | 0.68 | 0.68 | 0.70 | 0.71 | 0.74 | 0.68 | 0.69 | 0.67 | 0.72 | 0.74 |
| Evaluation of Translucency | | A | A | A | A | A | A | B | B | B | C | A | A | A | B | C |
| Contrast ratio percentage value of 6.4 minutes | | 135.3 | 135.3 | 134.8 | 134.8 | 134.8 | 136.8 | 136.8 | 132.9 | 101.4 | 100.0 | 133.8 | 133.3 | 135.8 | 100.0 | 100.0 |
| Contrast ratio percentage value of 24 minutes | | 97.1 | 98.5 | 98.6 | 98.6 | 98.6 | 98.5 | 101.5 | 98.6 | 100.0 | 100.0 | 98.5 | 98.6 | 98.5 | 100.0 | 100.0 |
| Evaluation of Contrast ratio percentage value | | B | B | B | B | B | B | B | B | A | A | B | B | B | A | A |

| | Example 1 | Example 2 | Example 3 | Example 4 | Example 5 | Example 6 | Example 7 | Example 8 | Example 9 | Example 10 | Example 11 | Example 12 | Example 13 | Example 14 | Example 15 |
|---|---|---|---|---|---|---|---|---|---|---|---|---|---|---|---|
| Comprehensive Evaluation of Translucency | A | A | A | A | A | A | B | B | A | B | A | A | A | A | B |
| Strength | 748 | 730 | 732 | 702 | 708 | 736 | 788 | 697 | 1015 | 1344 | 721 | 752 | 736 | 1180 | 1306 |

| | | Example 16 | Example 18 | Example 19 | Example 20 | Example 21 | Example 22 | Example 23 | Example 24 | Example 25 | Example 26 | Example 27 | Example 28 | Comparative Example 1 | Comparative Example 2 | Comparative Example 3 |
|---|---|---|---|---|---|---|---|---|---|---|---|---|---|---|---|---|
| Zirconia content (wt.%) | | 86.1 | 87.6 | 87.4 | 86.4 | 86.2 | 92.9 | 90.9 | 85.3 | 84.4 | 82.9 | 87.2 | 87.2 | 87.7 | 90.0 | 91.7 |
| Yttria content (wt. %) | | 10.4 | 9.3 | 9.3 | 9.2 | 9.1 | 4.0 | 6.0 | 11.5 | 12.5 | 14.0 | 9.2 | 9.2 | 9.3 | 6.9 | 5.2 |
| Gallium oxide content (wt.%) | | 0.59 | 0.1 | 0.3 | 1.5 | 1.7 | 0.59 | 0.59 | 0.59 | 0.59 | 0.59 | 0.59 | 0.59 | 0 | 0 | 0 |
| Alumina content (wt.) | | 0.05 | 0.05 | 0.05 | 0.05 | 0.05 | 0.05 | 0.05 | 0.05 | 0.05 | 0.05 | 0.01 | 0.3 | 0.05 | 0.05 | 0.05 |
| Contrast ratio | 6.4 minutes sintering | 0.92 | 0.94 | 0.93 | 0.93 | 0.94 | 0.76 | 0.72 | 0.92 | 0.93 | 0.93 | 0.92 | 0.94 | 0.94 | 0.74 | 0.76 |
| | 24 minutes sintering | 0.68 | 0.69 | 0.68 | 0.71 | 0.72 | 0.76 | 0.72 | 0.68 | 0.68 | 0.69 | 0.68 | 0.72 | 0.72 | 0.73 | 0.74 |
| | 427 minutes sintering | 0.69 | 0.68 | 0.68 | 0.72 | 0.73 | 0.76 | 0.72 | 0.68 | 0.68 | 0.68 | 0.69 | 0.72 | 0.67 | 0.72 | 0.74 |
| Evaluation of Translucency | | A | B | A | B | B | C | C | A | A | B | A | B | B | C | C |
| Contrast ratio percentage value of 6.4 minutes | | 133.3 | 138.2 | 136.8 | 129.2 | 128.8 | 100.0 | 100.0 | 135.3 | 136.8 | 136.8 | 133.3 | 130.6 | 140.3 | 102.8 | 102.7 |

EP 3 712 121 A1

(continued)

| | Exam-ple 16 | Exam-ple 18 | Exam-ple 19 | Exam-ple 20 | Exam-ple 21 | Exam-ple 22 | Exam-ple 23 | Exam-ple 24 | Exam-ple 25 | Exam-ple 26 | Exam-ple 27 | Exam-ple 28 | Compara-tive Exam-ple 1 | Compara-tive Exam-ple 2 | Compara-tive Exam-ple 3 |
|---|---|---|---|---|---|---|---|---|---|---|---|---|---|---|---|
| Contrast ratio percentage value of 24 minutes | 98.6 | 101.5 | 100.0 | 98.6 | 98.6 | 100.0 | 100.0 | 100.0 | 100.0 | 101.5 | 98.6 | 100.0 | 107.5 | 101.4 | 100.0 |
| Evaluation of Contrast ratio percentage value | B | B | B | B | B | A | A | B | B | B | B | B | C | B | B |
| Comprehensive Evaluation of Translucency | A | B | A | B | B | B | B | A | A | B | A | B | C | C | C |
| Strength | 648 | 821 | 758 | 682 | 669 | 1305 | 1364 | 603 | 584 | 486 | 703 | 761 | 867 | 1226 | 1386 |

Example 17: It was confirmed in Example 17 that coloring was possible.

With respect to the use of substantially any plural and/or singular terms herein, those having skill in the art can translate from the plural to the singular and/or from the singular to the plural as is appropriate to the context.

Although the description herein has been given with reference to the drawings and embodiments, it should be noted that those skilled in the art may make various changes and modifications on the basis of this invention without difficulty. Accordingly, any such changes and modifications are intended to be included in the scope of the embodiments.

[Industrial availability]

The present invention relates to an invention of a zirconia mill blank for dental cutting and machining capable of high speed sintering and a preparing method thereof, and is a technique which can be used in the dental field.

**Claims**

1. A zirconia mill blank for dental cutting and machining, containing;
   a gallium compound.

2. The zirconia mill blank for dental cutting and machining according to claim 1, wherein;
   an amount of the gallium compound is within a range of 0.20 wt.% to 1.50 wt.% in terms of gallium oxide.

3. The zirconia mill blank for dental cutting and machining according to claim 1 or 2, wherein;
   the zirconia mill blank for dental cutting and machining further contains an yttrium compound in an amount within a range of 5.0 to 12.5 wt.% in terms of yttria.

4. The zirconia mill blank for dental cutting and machining according to any one of claims 1 to 3, wherein;
   in a case in which a sintered body prepared by sintering at 1560 °C for a sintering time of 24 minutes is defined as a 24 minutes sintered body and a sintered body prepared by sintering at 1560 °C for a sintering time of 427 minutes is defined as a 427 minutes sintered body,
   a relationship of a contrast ratio of a sample having a thickness of 1 mm between the 24 minutes sintered body and the 427 minutes sintered body satisfies the following formula (1).

   Formula (1): (Contrast ratio of 24 minutes sintered body) / (Contrast ratio of 427 minutes sintered body) × 100 ≤ 102 (%)

5. The zirconia mill blank for dental cutting and machining according to any one of claims 1 to 3, wherein;
   in a case in which a sintered body prepared by sintering at 1560 °C for a sintering time of 6.4 minutes is defined as a 6.4 minutes sintered body and a sintered body prepared by sintering at 1560 °C for a sintering time of 427 minutes is defined as a 427 minutes sintered body,
   a relationship of a contrast ratio of a sample having a thickness of 1 mm between the 6.4 minutes sintered body and the 427 minutes sintered body satisfies the following formula (2).

   Formula (2): (Contrast ratio of 6.4 minutes sintered body) / (Contrast ratio of 427 minutes sintered body) × 100 ≤ 102 (%)

Europäisches
Patentamt

European
Patent Office

Office européen
des brevets

# EUROPEAN SEARCH REPORT

Application Number

EP 20 15 2600

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 800 646 A1 (3M ESPE AG [DE]) 27 June 2007 (2007-06-27) * claims 7,8,10-16; examples 1,2 * ----- | 1-5 | INV. C04B35/486 ADD. A61C13/00 |
| X | EP 2 412 691 A1 (NORITAKE CO LTD [JP]) 1 February 2012 (2012-02-01) * paragraphs [0002], [0009] - [0012], [0041] - [0054]; figures 1-4; examples 8,23,25; table 1 * ----- | 1-5 | |

TECHNICAL FIELDS
SEARCHED     (IPC)

C04B

The present search report has been drawn up for all claims

| Place of search | Date of completion of the search | Examiner |
|---|---|---|
| Munich | 6 August 2020 | Bonneau, Sébastien |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 20 15 2600

This annex lists the patent family members relating to the patent documents cited in the above-mentioned European search report.
The members are as contained in the European Patent Office EDP file on
The European Patent Office is in no way liable for these particulars which are merely given for the purpose of information.

06-08-2020

| Patent document cited in search report | | | Publication date | Patent family member(s) | | | Publication date |
|---|---|---|---|---|---|---|---|
| EP 1800646 | A1 | | 27-06-2007 | AT | 359755 | T | 15-05-2007 |
| | | | | AU | 2002250946 | B2 | 12-05-2005 |
| | | | | CA | 2435618 | A1 | 22-08-2002 |
| | | | | CN | 1518438 | A | 04-08-2004 |
| | | | | DE | 10107451 | A1 | 12-09-2002 |
| | | | | EP | 1359882 | A1 | 12-11-2003 |
| | | | | EP | 1800646 | A1 | 27-06-2007 |
| | | | | ES | 2284854 | T3 | 16-11-2007 |
| | | | | JP | 2004527280 | A | 09-09-2004 |
| | | | | JP | 2008055183 | A | 13-03-2008 |
| | | | | US | 2004119180 | A1 | 24-06-2004 |
| | | | | WO | 02064099 | A1 | 22-08-2002 |
| EP 2412691 | A1 | | 01-02-2012 | CN | 102438964 | A | 02-05-2012 |
| | | | | EP | 2412691 | A1 | 01-02-2012 |
| | | | | JP | 5501642 | B2 | 28-05-2014 |
| | | | | JP | 2010222466 | A | 07-10-2010 |
| | | | | KR | 20110138393 | A | 27-12-2011 |
| | | | | US | 2012012789 | A1 | 19-01-2012 |
| | | | | WO | 2010110156 | A1 | 30-09-2010 |

EPO FORM P0459

For more details about this annex : see Official Journal of the European Patent Office, No. 12/82

**EP 3 712 121 A1**

**Patent documents cited in the description**

- WO 2015098765 A
- WO 2018056330 A
- WO 2018029244 A
- CN 107162603
- WO 2015199018 A